# EUROPÄISCHE PATENTSCHRIFT

(11) **EP 1 263 694 B1**
(45) Veröffentlichungstag und Bekanntmachung des Hinweises auf die Patenterteilung: **23.04.2008**
(21) Anmeldenummer: 01911743.1
(22) Anmeldetag: 07.03.2001
(51) Int. Cl.: C04B 38/00, B01D 69/10

(54) **VERFAHREN ZUR HERSTELLUNG EINES MONOLITHISCHEN, PORÖSEN KERAMISCHEN FORMKÖRPERS**
METHOD FOR PRODUCING MONOLITHIC, POROUS, CERAMIC SHAPED BODIES
PROCEDE DE PRODUCTION D'UNE PIECE MOULEE CERAMIQUE POREUSE MONOLITHIQUE

(30) Priorität: 14.03.2000 DE 10013366
(43) Veröffentlichungstag der Anmeldung: 11.12.2002
(73) Patentinhaber: Tami Deutschland Gmbh, 07629 Hermsdorf/Thüringen (DE)
(72) Erfinder: FLEISCHMANN, Thomas, 07646 Quirla (DE); KASTNER, Heike, 07639 Weissenborn (DE)
(74) Vertreter: Bock, Gerhard
(86) Internationale Anmeldenummer: PCT/EP2001/002541
(87) Internationale Veröffentlichungsnummer: WO 2001/068558

(56) Entgegenhaltungen:
- US-A- 5 223 318

## Beschreibung

Die Erfindung betrifft ein Verfahren zur Herstellung eines monolithischen, porösen keramischen Formkörpers gemäß Patentanspruch 1. Der Formkörper findet vorrangig als Stützmaterial für poröse anorganische und/oder organische Membranen für die Durchflußfiltration (cross flow) von Flüssigkeiten und Gasen Verwendung.

Nach dem Stand der Technik werden poröse oxidkeramische Filterwerkstoffe durch keramische Misch- und Formgebungsverfahren sowie anschließendem Sintern hergestellt. Zur Erreichung einer Porosität von >30% und Porengrößen von 1 - 20 µm sind zwei grundsätzliche Verfahren üblich:
a) Eine grobe keramische Pulverkörnung mit einer mittleren Korngröße zwischen 3 - 500 µm wird mit einer feinen keramischen Pulverkörnung mit einer mittleren Korngröße zwischen 0,01 - 7 µm gemischt, wobei das feinkörnige Pulvermaterial die grobkörnigen Partikel umhüllt. Aufgrund des niedrigeren Schmelzpunktes des feinkörnigen Materials, wirkt dieses als Flußmittel während des Sinterprozesses. Derartige Vorgehensweisen sind bspw. in EP 0 450 899, EP 0 585 152 oder US-PS 5,223,318 beschrieben.
b) Eine feine keramische Pulverkörnungen mit mittleren Korngrößen zwischen 0,01 - 7 µm wird mit organischen Materialien gemischt, geformt und gesintert, wobei beim Sintern das organische Material ausbrennt und offene Poren im Formkörper hinterläßt. Derartige Vorgehensweisen sind bspw. in EP 0 354 721 und EP 0 549 873 beschrieben.

Der Einsatz von Verfahren nach b) ist aus Umweltschutzgründen problematisch und garantiert darüber hinaus nicht die geforderte Werkstoffreinheit des porösen Filters. Die Herstellung eines keramischen Filterwerkstoffs, unter Einsatz von TiO₂-Pulver mit ausreichend großer Korngröße, wobei der Filterwerkstoff zu nahezu 100% aus TiO₂ bestehen und eine offene Porosität >20% aufweisen soll, ist mit den Verfahren nach dem bekannten Stand der Technik nicht möglich. Werden TiO₂-Pulver mit einer mittleren Korngröße zwischen 0,1 - 1 µm getempert, setzt bei einer Temperatur >1100°C eine Sinterung ein, welche mit einer Gefügeverdichtung und einer Festigkeitserhöhung einhergeht. In Temperaturbereichen > 1200°C ist auf diese Weise keine ausreichende offene Porosität zu erzielen.

Der Erfindung liegt die Aufgabe zugrunde, ein Verfahren zur Herstellung eines monolithischen, porösen keramischen Formkörpers anzugeben, der als Träger für organische und/oder anorganische Membranen zur Trennung von Feststoffen, Flüssigkeiten und Gasen mittels einer Durchflußfiltration Verwendung findet, wobei
- der Werkstoff für diese Formkörper aus TiO₂ >99,9% gebildet sein soll und
- handelsübliche TiO₂-Pulver einsetzbar sein sollen,
und der Formkörper folgende Eigenschaften:
- Offene Porosität: >10%,
- Mittlere Porengröße: 1 - 50 µm, vorzugsweise 3 - 5 µm,
- Mechanische Festigkeit: >20 N/mm², vorzugsweise >30 N/mm²
aufweisen soll.

Die Aufgabe wird durch die kennzeichnenden Merkmale des ersten Patentanspruchs gelöst. Die nach dem Stand der Technik zu verzeichnende starke Gefügeverdichtung des Werkstoffs beim Sintern im Temperaturbereich > 1200°C wird dadurch verhindert, daß ein wesentlicher Anteil des TiO₂-Ausgangspulvers bei Temperaturen >1200°C vorgesintert wird, wobei die Pulverpartikel zu Agglomeraten versintern. Dieses vorverdichtete Material wird in einem anschließenden Prozeß derart zerkleinert, daß mittlere Korngrößen < 100 µm entstehen. Dieses so gewonnene, thermisch vorverdichtete Pulver wird mit einem weiteren kleineren Anteil des thermisch nicht vorbehandelten TiO₂-Ausgangspulvers vermischt, geformt und bei Temperaturen, die unterhalb der Vorsintertemperatur liegen gesintert. Dabei wird eine Versinterung des thermisch nicht vorbehandelten Pulvers mit dem thermisch vorbehandelten Pulver erzielt, wobei die hierbei eintretende Gefügeverdichtung nur durch das Sintern des kleineren Anteils des thermisch nicht vorbehandelten TiO₂-Ausgangspulvers erfolgt. Im Ergebnis dieser Vorgehensweise erhält man einen monolithischen, porösen keramischen Formkörper mit den gemäß vorliegender Aufgabenstellung zu erreichenden Eigenschaften.

Die Erfindung soll nachstehend anhand dreier Ausführungsbeispiele näher erläutert werden:

In einem ersten Ausführungsbeispiel werden 70 Gew% eines handelsüblichen TiO₂-Ausgangspulvers mit einer mittleren Korngröße von 0,9 *µ*m bei 1320°C gesintert und anschließend mittels einer Trommelmühle auf einen Siebrückstand <1% bei 100 *µ*m naß gemahlen. Nach dem Trocknen des vorgesinterten Pulvers wird dieses in einem Mischkneter mit 30 Gew% TiO₂-Pulver einer mittleren Korngröße von 0,3 µm, welches als Suspension zugegeben wird, gemischt und durch Zugabe von Cellulose plastifiziert. Aus dieser Masse lassen sich beliebige Grundkörper, bspw. extrudierte Rohre, formen, die bei ca. 1300°C gesintert werden. Danach weisen diese Formkörper eine offene Porosität von 25%, eine 80 bar Berstdruckfestigkeit und eine mittlere Porengröße von 3,0 µm auf.

In einem zweiten Ausführungsbeispiel werden 60 Gew% eines handelsüblichen TiO₂-Ausgangspulvers mit einer mittleren Korngröße von 1,4 *µ*m bei 1350°C gesintert und anschließend, analog zum ersten Ausführungsbeispiel, auf einen Siebrückstand <5% bei 100 *µ*m gemahlen. Das derart vorgesinterte Pulver wird anschließend in einem Mischgranulator mit 20 Gew% TiO₂-Pulver einer mittleren Korngröße von 0,3 µm und 20 Gew% TiO₂-Pulver einer mittleren Korngröße von 0,5 µm gemischt und unter Zugabe einer PVA-Lösung (10%ig) granuliert. Nach dem Trocknen des Granulates bis auf 0,2-1% Wassergehalt wird dieses mittels einer Trockenpresse im Beispiel zu Platten verpreßt, welche nach dem Sintern in einem Elektroofen bei 1300°C eine offene Porosität von 29% bei 45 N/mm² Festigkeit sowie eine mittlere Porengröße von 3,5 µm aufweisen.

In einem dritten Ausführungsbeispiel werden 80 Gew% eines handelsüblichen TiO₂-Ausgangspulvers mit einer mittleren Korngröße von 0,5 µm bei 1300°C gesintert und anschließend mittels einer Trommelmühle auf einen Siebrückstand <1% bei 100 µm naß gemahlen. Der Trommelmühle werden anschließend 20 Gew% TiO₂-Pulver einer mittleren Korngröße von 0,15 µm sowie eine PVA-Lösung zugegeben, die Bestandteile gemischt und anschließend mittels eines Sprühturms zu Preßgranulat granuliert. Aus dem so gewonnenen Granulat werden im Beispiel ebenfalls Platten geformt, die bei 1260°C gesintert werden. Nach dem Sintern weisen diese Formkörper eine offene Porosität von 35% bei 55 N/mm² Festigkeit sowie eine mittlere Porengröße von 5 µm auf.

Die in den vorstehenden Ausführungsbeispielen angegebenen Sintertemperaturen verstehen sich als die beim keramischen Verfahren einzuhaltenden Temperaturen bei den jeweiligen Haltephasen. Der Sinterprozeß setzt sich dabei aus einer Aufheizphase, der Haltephase und einer Abkühlphase zusammen, die in relativ großen Bereichen von den vorhandenen technischen Gegebenheiten der jeweiligen Temperöfen abhängen. So sind für vorliegendes Herstellungsverfahren sinnvolle Temperatur-Zeit-Verläufe folgende:
1.) Für das Vorsintern des ersten TiO₂-Pulveranteils:
   1.1) von 20°C auf 1350°C über 5 bis 12 h, im Beispiel 7 h,
   1.2) 1350°C während einer Haltephase von 0,5 bis 2 h, im Beispiel 1 h,
   1.3) von 1350°C auf 20°C über 7 bis 12 h, im Beispiel 9 h und
2.) Für das Sintern des Versatzes mit dem/den weiteren TiO₂-Pulveranteil(en):
   2.1) von 20°C auf 450°C über 3 bis 8 h, im Beispiel 5 h, von 450°C auf 1260°C, über 3 bis 7 h, im Beispiel 5 h,
   2.2) 1260°C während einer Haltephase von 1 bis 4 h, im Beispiel 2 h,
   2.3) von 1260°C auf 20°C über 6 bis 12 h, im Beispiel 7 h.

## Patentansprüche

1. Verfahren zur Herstellung eines monolithischen, porösen keramischen Formkörpers aus TiO₂ mit einer mittleren Porengröße von 1 - 50 *µ*m und einer Porosität > 10%, **dadurch gekennzeichnet, daß** ein erster TiO₂-Pulveranteil bei Temperaturen > 1200°C vorgesintert und anschließend auf einen Siebrückstand < 5% bei Korngrößen kleiner 100 µm zerkleinert wird, daß dieses Granulat mit wenigstens einem weiterem TiO₂-Pulveranteil versetzt und vermischt wird, dessen Korngröße deutlich kleiner, ≤ 0,5 µm, als des ersten Pulveranteils festgelegt ist, und daß das so entstandene Gemisch zu einem Formkörper verpreßt und dieser Formkörper einem weiteren Sinterprozeß bei Temperaturen > 1100°C, die jedoch unterhalb der ersten Sintertemperatur liegt, unterworfen wird.

2. Verfahren nach Anspruch 1, **dadurch gekennzeichnet, daß** die Korngröße des ersten TiO₂-Pulveranteils vor dem ersten Sinterschritt zwischen 0,3 - 5 µm gewählt wird, wobei die Korngröße des weiteren TiO₂-Pulveranteils jeweils deutlich geringer gewählt wird.

3. Verfahren nach Anspruch 1, **dadurch gekennzeichnet, daß** Korngrößenbereiche des ersten Pulveranteils nach dem ersten Sinterprozeß von ca. 100 µm für den weiteren Herstellungsprozeß ausgewählt werden.

4. Verfahren nach Anspruch 1 oder 2, **dadurch gekennzeichnet, daß** die Korngröße des weiteren TiO₂-Pulveranteils zwischen 0,1 - 0,5 *µ*m gewählt wird.

## Claims

1. Method for producing a monolithic, porous, ceramic shaped body from TiO₂ having a mean pore size of 1 - 50 µm and a porosity of > 10%, **characterized in that** a first TiO₂-powder part is pre-sintered at temperatures > 1200°C and subsequently reduced in size to a screening refuse of < 5% with grain sizes smaller 100 µm, **in that** at least one further part of TiO₂-powder is added to and mixed with this granulate, whereby the grain size of said further part is defined to be considerably smaller, ≤ 0.5µm, than the grain size of said first TiO₂-powder part, and **in that** the resulting mixture is pressed to a shaped body and that said shaped body is subject to a further sintering process at temperatures > 1100°C which, however, are lower than the first sintering temperature.

2. Method according to claim 1, **characterized in that** the grain size of the first TiO₂-powder part is selected between 0.3 µm - 5 µm before the first sintering process, whereby the grain size to be selected for the further TiO₂-powder part must always be considerably smaller.

3. Method according to claim 1, **characterized in that** the grain size ranges of the first powder part of about 100 µm after the first sintering process are selected for the further manufacturing process.

4. Method according to claim 1 or 2, **characterized in that** the grain size to be selected for the further TiO₂-powder part is between 0.1 - -0.5 *µ*m.

## Revendications

1. Le procédé de production d'une pièce moulée céramique poreuse monolithique du genre TiO₂, dont les dimensions moyennes des pores se situent dans des dimensions allant de 1 à 50 µm et la porosité s'éleve à > 10%, est **caractérisé en ce qu'**une portion du poudre de TiO₂ sera préfrittée dans un première processus de frittage par des températures > 1200°C puis concassée jusqu'à ce qu'un refus de tamisage < 5% se forme, dont la fraction granulométrique demeure inférieure à 100 µm, et qu'une autre portion de poudre de TiO₂ se trouve ensuite additionnée et mélangée et dont la granulométrie est nettement inférieure - soit ≤ 0,5 µm - à la granulométrie de la première portion additionnée et que le mélange ainsi obtenu sera pressé pour former un corps moulé qui, au cours d'un autre processus, subira un frittage à des températures > 1100°C , lesquelles seront inférieures à celles du premier processus de frittage.

2. Le procédé suivant la revendication 1 est **caractérisé en ce que** la granulométrie de la première portions de poudre de TiO₂ avant le premier frittage se situe entre 0,3 à 5 µm et que la granulométrie de l'autre portion de poudre de TiO₂ demeure nettement inférieure à celle-là.

3. Le procédé suivant la revendication 1 est **caractérisé en ce qu'**après le premier processus de frittage, les plages de granulométrie de la première portion de poudre à adopter pour le processus de production suivant s'élèveront à environ 100 µm.

4. Le procédé suivant les revendications 1 ou 2 est **caractérisé en ce que** la granulométrie de l'autre portion de poudre de TiO₂ doit se situer entre 0,1 et 0,5 µm.
